# EUROPÄISCHE PATENTSCHRIFT

(11) **EP 3 317 045 B1**
(45) Veröffentlichungstag und Bekanntmachung des Hinweises auf die Patenterteilung: **13.11.2019**
(21) Anmeldenummer: 16734629.5
(22) Anmeldetag: 30.06.2016
(51) Int. Cl.: B23Q 11/12

(54) **DREHTISCH FÜR EINE WERKZEUGMASCHINE**
TURNTABLE FOR A MACHINE TOOL
TABLE TOURNANTE POUR MACHINE-OUTIL

(30) Priorität: 03.07.2015 DE 102015110780
(43) Veröffentlichungstag der Anmeldung: 09.05.2018
(73) Patentinhaber: Franz Kessler GmbH, 88422 Bad Buchau (DE)
(72) Erfinder: KEIBACH, Bernd, 88524 Uttenweiler-Aderzhofen (DE)
(74) Vertreter: Otten, Roth, Dobler & Partner mbB Patentanwälte
(86) Internationale Anmeldenummer: PCT/EP2016/065373
(87) Internationale Veröffentlichungsnummer: WO 2017/005610

(56) Entgegenhaltungen:
- US-A1- 2008 047 120
- US-A1- 2009 235 783
- US-A1- 2011 001 282

## Beschreibung

Die Erfindung betrifft einen Drehtisch für eine Werkzeugmaschine, wobei eine Statoreinheit und eine wenigstens um eine Drehachse drehbare Rotoreinheit vorgesehen ist, nach dem Oberbegriff des Anspruchs 1. Ein solcher Drehtisch ist aus der US2011/0001282 bekannt.

### Stand der Technik

Die Aufgabe von Werkzeugmaschinen ist es im Allgemeinen, Bauteilgeometrien eines Werkstückes zu erzeugen, vorzugsweise mit spanenden Verarbeitungstechniken, die hinsichtlich Form, Lage und Abmessungen genau definiert sind. Hierbei werden die Anforderungen in Bezug auf Genauigkeit immer höher, wobei nicht nur ein hundertstel, sondern auch zumindest teilweise bereits ein tausendstel Millimeter Genauigkeit gefordert wird.

Ein Drehtisch ist ein Teil einer Werkzeugmaschine, auf dem Werkstücke zur Bearbeitung aufgespannt werden. Der Drehtisch hat eine senkrechte oder bei manchen Anwendungen eine waagerechte Drehachse, um die ein Dreh- oder Schaltteller beziehungsweise Werkstücktisch mit dem aufgespannten Werkstück gedreht werden kann, so dass spanende Bearbeitungen in verschiedenen Positionen oder am drehenden Werkstück vorgenommen werden können. So werden die Drehtische zum Drehen oder Fräsen verwendet.

Je nach Anwendungsfall kommen als Antriebe Servomotoren mit Getriebe oder vielfach auch Direktantriebe mit Torquemotoren zum Einsatz.

Bei der spannenden Bearbeitung werden in den letzten Jahrzehnten die Anforderungen an die Genauigkeit und Steifigkeit sowie die maximal mögliche Drehgeschwindigkeit des Drehtisches immer höher. So werden bislang die Drehtische je nach Anwendungsfall einerseits in Bezug auf das Drehen mit relativ hohen Drehzahlen, meist größer 1000 Umdrehungen pro Minute, oder andererseits in Bezug auf das Fräsen mit hoher Steifigkeit ausgelegt.

Auch führen höhere Drehzahlen zu einer stärkeren Wärmebelastung der jeweiligen Komponenten und somit zu größeren thermischen Verspannungen, was nachteilige Verformungen/Veränderungen bzgl. der realisierbaren Genauigkeit bei der Bearbeitung generiert. Dies reduziert die Eignung des Drehtisches für das Drehen.

### Aufgabe und Vorteile der Erfindung

Aufgabe der Erfindung ist es demgegenüber, einen Drehtisch für Werkzeugmaschinen vorzuschlagen, der höhere Anforderungen sowohl in Bezug auf hohe Drehzahlen und zugleich auf große Steifigkeit beziehungsweise Genauigkeit erfüllt und somit insbesondere universell einsetzbar ist bzw. gute Eigenschaften in Bezug auf eine Verwendung zum Drehen und zugleich zum Fräsen aufweist.

Diese Aufgabe wird, ausgehend von einem Drehtisch der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßer Drehtisch dadurch aus, dass die Rotoreinheit zumindest im Bereich des Motorantriebs und/oder der ersten Lagereinheit wenigstens eine ein Kühlmedium sowie mindestens eine Kühlfläche umfassende Rotor-Kühlvorrichtung zur Kühlung und/oder Aufnahme von Abwärme des Motorantriebs und/oder der ersten Lagereinheit aufweist. So ist die Rotor-Kühlvorrichtung als (innere) Motor-Kühlvorrichtung des Motorantriebs und/oder als Lagerkühlvorrichtung ausgebildet.

Eine derartige "innere" Kühlung der Rotoreinheit bzw. des Rotors, speziell des Motorantriebs und/oder der Lagerung des Drehtisches, führt zu einer langen Lebensdauer des Drehtisches sowie zu einer vorteilhaften Temperierung und hierdurch zu einer großen Genauigkeit bei der Bearbeitung. Zudem können aufgrund der "inneren" Kühlung der Lagerung bzw. des/der Innenringe der Lagerung auch höhere Drehzahlen realisiert werden. So wird die Verlustwärme der Lagerung in vorteilhafter Weise abgeführt bzw. gekühlt, so dass nachteilig hohe Temperaturspitzen der Lagerung wirkungsvoll vermieden werden können.

Beim Stand der Technik wurde bisher jahrzehntelang in der Praxis ausschließlich eine "äußere" Kühlung des Stator-Mantels und ggf. des Außenringes der Lagerung realisiert. Mit Hilfe der erfindungsgemäßen "inneren Kühlung" des Motor-Kerns und/oder der Lagerung bzw. eines Innenringes kann eine deutliche Verbesserung der Kühlung beziehungsweise Temperierung des Drehtisches und somit eine deutlich höhere Genauigkeit der Bearbeitung erreicht werden. Gerade in Kombination mit einer "äußeren Kühlung" des Stators beziehungsweise der Statoreinheit kann nunmehr eine nahezu umfassende beziehungsweise vollständige Kühlung/Temperierung des gesamten Drehtisches erreicht werden.

Thermische Verformungen, gerade der Tischplatte, sind ein großer Störfaktor bei der Bearbeitung, die insofern sie nicht kompensiert werden, zu erheblichen Geometriefehlern an dem zu fertigenden Werkstück/Bauteil führen. Diese Verformungen entstehen unter anderem durch das Aufheizen unterschiedlicher Bereiche des Drehtisches im Betrieb und die Ursache dieses Aufheizens sind häufig unterschiedlichste Verlustleistungsquellen innerhalb des Drehtisches.

Neben der Lagerung der Rotoreinheit ist eine nicht zu vernachlässigende Verlustleistungsquelle der elektromotorische Antrieb bzw. Motorantrieb bei direkt angetriebenen Drehtischen. Der integrierte Motorantrieb, d.h. der Elektromotor, wandelt die elektrisch zugeführte Energie in Nutzenergie, aber auch immer zu einem gewissen Anteil in Verlustenergie um. Da moderne Drehtischantriebe zum Teil eine erhebliche elektrische Leistung aufweisen, sind auch die Verluste zum Teil erheblich.

Erfindungsgemäß ist wenigstens eine zweite Lagereinheit zum Lagern der Rotoreinheit vorgesehen ist, wobei zwischen der ersten Lagereinheit und der zweiten Lagereinheit ein Abstand vorgesehen. Mit Hilfe zweier separater Lagereinheiten, die voneinander beabstandet angeordnet sind, können besonders hohe Kippmomente aufgenommen und eine hohe Genauigkeit bei der Bearbeitung sowohl beim Drehen als auch beim Fräsen gewährleistet werden. Durch die vorteilhafte Positionierung von zwei separaten Lagereinheiten an zwei entsprechend voneinander beabstandeten Positionen innerhalb des Drehtisches wird erreicht, dass eine hohe Steifigkeit beziehungsweise eine wirkungsvolle Verhinderung eines Verkippens des Drehtisches bzw. der Drehachse beziehungsweise des Dreh-/Schalttellers realisiert wird.

Erfindungsgemäß ist wenigstens zwischen der ersten und der zweiten Lagereinheit zumindest eine wenigstens eine Kühlfläche sowie ein Kühlmedium umfassende Lagerkühlvorrichtung zur Kühlung und/oder Aufnahme von Abwärme der ersten und der zweiten Lagereinheit vorgesehen. Hiermit wird erreicht, dass nachteilige Abwärme der ersten und/oder der zweiten Lagereinheit nicht zu einer nachteiligen Verspannung beziehungsweise Beschädigung zumindest eines der beiden Lagereinheiten führt.

Erfindungsgemäß weist die Rotor-Kühlvorrichtung bzw. Lagerkühlvorrichtung wenigstens einen im Wesentlichen sich über den gesamten Umfang erstreckenden Ringkanal zum Verteilen und/oder Sammeln von Kühlmedium auf, insbesondere ist der Ringkanal längs der Drehachse in axialer Richtung und/oder quer zur Drehachse in radialer Richtung betrachtet zwischen der ersten und der zweiten Lagereinheit angeordnet. Hiermit wird eine vollumfängliche Kühlung beziehungsweise Temperierung des Inneren bzw. Kerns der Rotoreinheit und/oder der ersten und/oder zweiten Lagereinheit, insbesondere des/der Innenringe der ersten und/oder zweiten Lagereinheit erreicht. Dies führt gerade in Kombination mit einer "äußeren" Mantel-Kühlung, d.h. insbesondere einer Kühlung der Statoreinheit und/oder des/der jeweiligen Außenringe der ersten und/oder zweiten Lagereinheit, zu einer vorteilhaften gleichmäßigen Kühlung/Temperierung der ersten und/oder der zweiten Lagereinheit. Hiermit können nachteilige Wärmespannungen beziehungsweise Belastungen wirkungsvoll und umfassend vermieden beziehungsweise verringert werden. Dies führt zu einer besonders hohen realisierbaren Bearbeitungsgenauigkeit mit dem Drehtisch gemäß der Erfindung.

In einer vorteilhaften Variante der Erfindung umfasst die Rotor- bzw. Lagerkühlvorrichtung oberflächenvergrößernde Kühlstrukturen. Diese oberflächenvergrößernden Strukturen bzw. die Oberflächenvergrößerung gewährleistet ein besserer Wärmeübergang über die Kühl- bzw. Wärmekontaktflächen.

In einer bevorzugten Ausführungsform der Erfindung sind mehrere, jeweils mindestens eine Kühlfläche aufweisende, wenigstens teilweise über den Umfang verteilte/angeordnete Kühlkanäle und/oder Kühlelemente vorgesehen. Vorzugsweise sind die Kühlkanäle und/oder Kühlelemente, z.B. zwischen etwa 3 bis 15, vorzugsweise ca. 6-10 Elemente/Kanäle, nahezu gleichmäßig und/oder symmetrisch in Bezug auf den Querschnitt des Drehtisches beziehungsweise der Rotoreinheit angeordnet, vorzugsweise über den gesamten Umfang verteilt. Hiermit kann eine vorteilhafte Oberflächenvergrößerung der wirksamen Kühl- bzw. Wärmetauscherfläche und zudem eine besonders gleichmäßige und umfassende Kühlung/Temperierung vor allem der Rotoreinheit beziehungsweise des gesamten Drehtisches erreicht werden, vorzugsweise zusätzlich mit Hilfe einer äußeren, im Wesentlichen voll umfänglichen Statorkühlung und/oder Statorgehäusekühlung.

Vorteilhafterweise weisen die Kühlkanäle und/oder Kühlelemente jeweils wenigstens einen im Wesentlichen radial ausgerichteten Abschnitt auf. Hiermit kann eine vorteilhafte Verteilung des Kühlfluids in radial voneinander beabstandeten Bereichen/Zonen der Rotoreinheit verwirklicht werden. So kann z.B. im Fall von zwei radial beabstandete bzw. unterschiedlich große Durchmesser aufweisende, erste und zweite Lagereinheiten eine Kühlung dieser beiden Lagereinheiten und/oder des dazwischen angeordneten Zwischenbereichs der Rotoreinheit realisiert werden. Dieser Zwischenbereich kann alternativ oder zusätzlich auch mit einem erfindungsgemäßen Ringkanal gekühlt werden. Diese Maßnahmen verbessern die (innere) Kühlung der Rotoreinheit.

In einer besonderen Weiterbildung sind die im Wesentlichen radial ausgerichteten Abschnitte der Kühlkanäle und/oder Kühlelemente im Wesentlichen senkrecht zur Drehachse und/oder auf/an einer Ebene bzw. ebenen Fläche angeordnet sind. So sind die Kühlkanäle und/oder Kühlelemente im Wesentlichen sternförmig und radial auf dieser Ebene angeordnet, wobei die Drehachse der Rotoreinheit als Flächennormale dieser Ebene ausgebildet ist. Es sind die bevorzugt radial ausgerichteten Abschnitte der Kühlkanäle und/oder Kühlelemente in vorteilhafter Weise in Richtung Drehachse im Wesentlichen nicht versetzt und insb. senkrecht/orthogonal zur Drehachse angeordnet.

Es hat sich in ersten Untersuchungen gezeigt, dass hiermit eine besonders gleichmäßige radiale Kühlung umgesetzt werden kann, so dass nur sehr geringe bzw. nahezu keine nachteiligen thermischen Veränderungen der Rotoreinheit bzw. der Lage der Drehachse realisiert werden.

Erfindungsgemäß sind die im Wesentlichen radial ausgerichteten Abschnitte der Kühlkanäle und/oder Kühlelemente zwischen einem als Verteiler-Ringkanal ausgebildeten, ersten Ringkanal zum Verteilen von Kühlmedium in die Abschnitte und einem als Sammel-Ringkanal ausgebildeten, zweiten Ringkanal zum Sammeln von Kühlmedium aus den Abschnitten angeordnet. Hiermit ist eine besonders vorteilhafte Kühlung der Rotoreinheit umsetzbar. So kann u.a. eine nachteilige Temperaturänderung in Richtung der Längsachse wirkungsvoll vermieden bzw. reduziert werden.

Generell kann gemäß der Erfindung eine in Umfangsrichtung gleichmäßige Temperatur des Drehtisches, insb. der Rotoreinheit, erreicht/realisiert werden. Dies wird in vorteilhafter Weise gerade auch durch eine Kombination von Verteiler-Ringkanal und Sammel-Ringkanal sowie dazwischen vorhandener, radial ausgerichteter Kühlkanäle gewährleistet. Hierbei realisieren die Ringkanäle eine gleichmäßige Temperaturverteilung in Umfangsrichtung, wobei eine (signifikante) Temperaturänderung des Kühlmediums durch Wärmeaufnahme im Wesentlichen längs der radial ausgerichteten Kühlkanäle bzw. Kühlelemente erfolgt.

Demzufolge können gemäß der Erfindung keine relevanten Temperaturänderungen/-zunahmen in Umfangsrichtung, sondern im Wesentlichen nur in radialer Richtung entstehen bzw. verwirklicht werden. Dies führt in vorteilhafter Weise zur Vermeidung einer nachteiligen Änderung der Drehachsenausrichtung und somit zu einer besonders hohen Qualität bei der Werkstückbearbeitung bzw. des Betriebs der Werkzeugmaschine.

Vorteilhafterweise weist mindestens einer der Kühlkanäle und/oder Kühlelemente wenigstens ein Druckkontrollelement zur Kontrolle bzw. Einstellung des Drucks des Kühlmediums zumindest innerhalb des Kühlkanals/-elements auf. Bevorzugt weist jeder Kühlkanal und/oder jedes Kühlelement jeweils ein separates Druckkontrollelement auf. Hiermit kann eine vorteilhafte Kontrolle beziehungsweise Einstellung des Druckes und der Durchflussmenge der (unterschiedlichen) Kühlkanäle und/oder Kühlelemente verwirklicht werden, so dass jeweils möglichst eine nahezu gleiche Strömungsmenge bzw. gleicher Volumenstrom durch alle Kühlkanäle/-elemente und somit eine gleiche Kühlleistung aller Kühlkanäle/-elemente realisiert wird.

Dies ist beispielsweise bei ggf. relativ kleinem Querschnitt der Zuführung bzw. einer Zuströmeinheit, wie z.B. einer Drehdurchführung und/oder Fluidleitung/-schlauch, und relativ großen Strömungsquerschnitten der Kühlkanäle/-elemente, insbesondere bei einem Gesamtquerschnitt der Kühlkanäle bzw. Kühlelemente, der größer als der Gesamtquerschnitt der Zuführung bzw. Zuströmeinheit ist, von großem Vorteil. Relativ große Strömungsquerschnitte der Kühlkanäle/-elemente generieren relativ große Wärmetauscher- bzw. Kühlflächen, was besonders vorteilhaft ist.

Auch aufgrund von fertigungsbedingten kleineren Unterschieden/Toleranzen könnte sich ansonsten auch in jedem Kühlkanal eine etwas unterschiedliche Strömungsgeschwindigkeit beziehungsweise Durchflussmenge des Kühlmediums im Betrieb einstellen und somit zu einer etwas unterschiedlichen Kühlleistung führen, was zu gewissen Nachteilen bei der Kühlung und somit zu unterschiedlichen thermischen Wärmedehnungen/-spannungen führen könnte. Entsprechend ungleichmäßige Kühlleistungen beziehungsweise thermische Verspannungen werden durch ein oder mehrere vorteilhafte Druckkontrollelementen der Kühlkanäle und/oder Kühlelemente wirkungsvoll vermieden. Denkbar ist, dass eine separate Ansteuerung beziehungsweise Kontrolle der Druckkontrollelemente verwirklicht wird. So könnte die Strömungsgeschwindigkeit in den einzelnen Kühlkanälen jeweils separat durch eine vorteilhafte (elektrische/elektronische) Kontrolleinheit mit Hilfe der jeweiligen Druckkontrollelemente realisiert werden.

Beispielsweise ist ein Druckkontrollelement als Ventil und/oder als Drossel/Düse und/oder als Madenschraube mit innerem Durchflusskanal beziehungsweise einer Bohrung ausgebildet. Diese Bohrung beziehungsweise ein entsprechender Durchflusskanal der Madenschraube kann separat und sehr genau hergestellt werden, so dass besonders kostengünstig eine exakt definierte Durchströmung beziehungsweise Strömungsmenge durch jede dieser Madenschrauben/Drosseln erreicht wird. Eine entsprechende Madenschraube kann in vorteilhafter Weise mittels Innengewinde eines Kühlkanals/-elementes fixiert beziehungsweise angeordnet werden.

Vorzugsweise weisen die Kühlkanäle vergleichsweise große Durchmesser und somit eine relativ große Kühlfläche auf, um eine vorteilhafte Kühlung zu realisieren. In vorteilhafter Weise ist das Druckkontrollelement beziehungsweise die Düse/Drossel und/oder Madenschraube mit Bohrung am Ende des jeweiligen Kühlkanals beziehungsweise Kühlelementes beziehungsweise in einem Endabschnitt des Kühlkanals angeordnet. Hiermit wird im Kühlkanal/-element ein "Stau" des strömenden Kühlmediums generiert, so dass im Betrieb ein gleichmäßiger Druck im gesamten Kühlkanal beziehungsweise Kühlelement gewährleistet ist.

Vorzugsweise sind die mehreren Kühlkanäle und/oder Kühlelemente zwischen einem ersten Ringkanal und einem zweiten Ringkanal gemäß der vorliegenden Erfindung angeordnet. Hiermit kann in vorteilhafter Weise der erste Ringkanal als Verteiler-Ringkanal und der zweite Ringkanal als Sammel-Ringkanal ausgebildet werden. Mit Hilfe einer derartig vorteilhaften Kühleinheit kann beispielsweise mit einer oder zwei beziehungsweise wenigen Zufuhrleitungen/-elementen und nur einem oder zwei beziehungsweise wenigen Abfuhrleitungen bzw.

Abströmelementen eine vorteilhafte Kreislaufführung des Kühlmediums innerhalb des Drehtisches beziehungsweise im/durch die Rotoreinheit des Drehtisches verwirklicht werden. Hiermit kann ein vorgegebener bzw. definierter Kühlreislauf verwirklicht werden.

Ein definierter Kreislauf des Kühlmediums bzw. der Kühlflüssigkeit kann eine definierte, möglichst optimale Wärmeübertragung/-abgabe realisieren, wobei in vorteilhafter Weise eine Kühlflüssigkeit bzw. das Kühlmedium exakt an wenigstens eine/ein oder mehrere definierte Stellen bzw. Bereiche des Drehtisches geführt/geleitet werden kann, um hier Wärme aufzunehmen und ggf. zu einem externen Wärmetauscher/Kühler zu leiten. Vorzugsweise weist ein definierter Kühlkreislauf des Kühlmediums bzw. des flüssigen Kühlmittels wenigstens eine Druckerzeugungseinheit bzw. eine Umwälzpumpe oder dergleichen und/oder einen Mediumspeicher wie z.B. ein Ausgleichsbehälter oder dergleichen auf.

Vorteilhafterweise ist eine oder mehrere Drehdurchführungen zur Zufuhr und/oder Abfuhr eines oder mehrerer unterschiedlicher Fluide vorgesehen, wie z.B. des Kühlmediums und/oder eines Fixier-/Spannmediums zur Verspannung beziehungsweise Fixierung des Werkstücks an der Tischplatte, insbesondere eines druckdurchschlagbaren Gases bzw. von Druckluft und/oder eines Hydrauliköls.

In Bezug zur Verwendung von zwei separaten Lagereinheiten ist noch anzumerken, dass hiermit eine Optimierung der ersten Lagereinheit bezüglich der Aufnahme von Radialkräften beziehungsweise Radialbelastungen und zugleich eine Optimierung des zweiten Lagers bezüglich der Aufnahme von Axialkräften beziehungsweise Axialbelastungen verwirklicht werden kann. Hierdurch gewährleistet der Drehtisch gemäß der Erfindung eine hohe Steifigkeit und ist sowohl für eine Drehbearbeitung als auch für eine Fräsbearbeitung in besonderer Weise geeignet.

Gemäß der Erfindung kann der Drehtisch für eine besonders hohe Steifigkeit beziehungsweise Aufnahme von relativ großen Drehmomenten vor allem beim Fräsen ausgebildet werden, sodass eine hohe Qualität bei der Fräsbearbeitung des Werkstücks erreicht wird. Zugleich kann der erfindungsgemäße Drehtisch in vorteilhafter Weise mit relativ hohen Drehzahlen, z.B. größer als 1000 U/min oder sogar größer als 2000 U/min, betrieben werden, so dass auch eine hohe Qualität gerade auch beim Drehen erreicht wird.

Dagegen wurde seit Jahrzehnten beim Stand der Technik ausschließlich eine einzige Lagereinheit beziehungsweise ein einziges Axial-Radial-Lager verwendet, d.h. insb. mit einem einzigen Innenring, da bei einem Drehtisch systembedingt immer sehr wenig Bauraum für die Bauteile und gerade auch für die Lagerung zur Verfügung steht. Diese eine bzw. einzige Lagereinheit des Drehtisches wurde jedoch sowohl für die Drehbearbeitung als auch für die Fräsbearbeitung ausgelegt/dimensioniert, so dass die entsprechende Werkzeugmaschine nur eingeschränkt zum Drehen und zum Fräsen geeignet war.

Die vorteilhafte Variante der Erfindung mit zwei separaten Lagereinheiten stellt demzufolge eine Abkehr der Jahrzehnte lang üblichen Praxis dar und verwendet im Gegensatz hierzu zwei separate beziehungsweise voneinander beabstandete Lagereinheiten, um den Drehtisch für eine Drehbearbeitung und für eine Fräsbearbeitung in besonders vorteilhafter Weise auszubilden, nämlich eine hohe Genauigkeit und eine hohe Steifigkeit als auch eine hohe Drehzahleignung des Drehtisches zu gewährleisten.

Im Sinn der Erfindung ist ein Drehtisch beispielsweise dadurch definiert, dass eine Gesamtlänge des Drehtisches kleiner oder gleich als ein Außendurchmesser des Drehtisches ist. Beispielsweise weist der Drehtisch eine Tischplatte beziehungsweise ein Dreh- oder Schaltteller auf, das einen Außendurchmesser aufweist, der größer als die Axiallänge des Drehtischgehäuses ist, insbesondere größer als die Axiallänge der Rotoreinheit. Auch ist im Sinn der Erfindung bei einem direkt angetriebenen Drehtisch mit Torquemotor die elektromagnetische Antriebseinheit derart ausgebildet, dass ein (maximaler) Außendurchmesser des (elektromagnetischen) Stators beziehungsweise der Spule/Spulen größer als die Axiallänge des (elektromagnetischen) Stators beziehungsweise der Spule/Spulen des Stators ist.

Ein Drehtisch im Sinn der Erfindung weist in vorteilhafter Weise eine Tischplatte beziehungsweise ein Dreh- oder Schaltteller auf, dass wenigstens eine Fixiereinheit zur Fixierung eines Werkstücks aufweist. Vorzugsweise ist die Fixiereinheit als Spanneinheit zum Verspannen des Werkstücks ausgebildet, wobei insbesondere eine pneumatische und/oder hydraulische Fixierung/Verspannung realisiert ist.

Weiterhin weist ein Drehtisch im Sinn der Erfindung eine einseitige Lagerung bzw. Lagereinheiten auf, die zwischen der Tischplatte beziehungsweise dem Dreh- oder Schaltteller und dem Antriebssystem, insbesondere dem Direktantrieb beziehungsweise Torquemotor angeordnet ist/sind. Dies bedeutet, dass in vorteilhafter Weise sowohl die erste Lagereinheit als auch die zweite Lagereinheit zwischen der Tischplatte beziehungsweise dem Dreh- oder Schaltteller und dem Antriebssystem beziehungsweise dem elektromagnetischen Rotor und Stator, d.h. dem Torquemotor, angeordnet sind.

Entsprechend lediglich einseitig gelagerte Drehtische, insbesondere mit Direktantrieb beziehungsweise Torquemotor, können im Betreib bzw. während der Bearbeitung eine vertikal oder horizontal/waagerecht ausgerichtete Drehachse aufweisen. Vor allem bei der Ausführungsform mit waagerechter beziehungsweise horizontaler Drehachse während der Bearbeitung wirkt nicht nur das Gewicht des Werkstückes, das zum Beispiel mehrere 100 kg oder z.T. fast eine Tonne betragen kann, auf die Lagerung beziehungsweise das erste und das zweite Lager, sondern zusätzlich auch das Gewicht des massiven Drehtisches beziehungsweise der Rotoreinheit. Gerade bei derartigen Drehtischen mit zumindest zeitweise waagerechter/horizontaler Drehachse ist die erfindungsgemäße Ausbildung von zwei separaten, voneinander beabstandeten Lagereinheiten von besonderem Vorteil und gewährleisten selbst in dieser Bearbeitungslage eine hohe Steifigkeit beziehungsweise Genauigkeit des Drehtisches.

Vorzugsweise ist der Drehtisch als Schwenkrundtisch ausgebildet, wobei der Drehtisch wenigstens eine um eine horizontal ausgerichtete und/oder orthogonal bzw. senkrecht zur Drehachse der Rotoreinheit des Drehtisches aufweisende Rotationsachse aufweist. Diese Rotationsachse wird auch als sogenannte A-Achse und die Drehachse der Rotoreinheit als sogenannte C-Achse bezeichnet. Hiermit kann der vorteilhafte Drehtisch gemäß der Erfindung sowohl in einer horizontalen als auch in einer vertikalen Position der Drehachse und/oder der Tischplatte positioniert werden. Gegebenenfalls kann das Werkstück sogar auch um 180° verdreht beziehungsweise über Kopf bearbeitet werden.

Vorteilhafterweise weist der Schwenkrundtisch wenigstens einen, vorzugsweise zwei Tragarme bzw. Schwenkarme auf, die beispielsweise (jeweils) einen Direktantrieb beziehungsweise Torquemotor zur Rotation um die Rotationsachse bzw. sog. A-Achse aufweisen. Diese A-Achse kann bei Drehtischen in Bezug auf die vertikale Ebene sowohl in einem Winkel von 90° als auch in einem Winkel von 45° angeordnet werden.

Vorzugsweise ist die erste Lagereinheit als Axial-Schräg-Kugellager und/oder als Axial-Schräg-Rollenlager ausgebildet und/oder ist die zweite Lagereinheit als Zylinderrollenlager oder Kegelrollenlager ausgebildet. Hierbei kann die erste als auch die zweite Lagereinheit beispielsweise als einreihiges oder zweireihiges Lager, d.h. mit einer oder zwei nebeneinander angeordneten Laufbahnen auf einem gemeinsamen Innen- und/oder Außenring, realisiert werden. Hiermit wird in vorteilhafter Weise ermöglicht, dass vor allem das Zylinderrollenlager beziehungsweise Kegelrollenlager sehr hohe radiale Belastungen beziehungsweise Kräfte aufnehmen kann und somit eine besonders hohe radiale Steifigkeit des Drehtisches gemäß der Erfindung gewährleistet werden kann. Dies ist insbesondere für Drehtische mit wenigstens zeitweiser waagerechter beziehungsweise horizontaler Drehachse von besonderem Vorteil, wobei gerade auch das zum Teil große Gewicht der Werkstücke entsprechend radial auf die Lagerung wirkt.

In einer besonderen Weiterbildung der Erfindung ist wenigstens quer zur Drehachse in radialer Richtung betrachtet der Abstand zwischen der ersten und zweiten Lagereinheit ausgebildet. Hiermit wird erreicht, dass einerseits sehr kompakt bzw. Platz sparend die Lagerung mit den beiden separaten Lagereinheiten realisiert werden kann. Andererseits wird hierdurch erreicht, dass eine hohe Kippsteifigkeit des Drehtisches beziehungsweise der Tischplatte gegenüber sehr großen Belastungen verwirklicht werden kann. Beispielsweise können mit dieser Maßnahme die beiden separaten Lagereinheiten benachbart zum Torquemotor beziehungsweise zum elektromagnetischen Direktantriebssystem und/oder benachbart zur Tischplatte beziehungsweise zum Dreh- oder Schaltteller angeordnet werden.

So können besonders kleine Axiallängen des Drehtisches beziehungsweise des Drehtischgehäuses und/oder der Rotoreinheit und somit eine besonders "niedrige" bzw. flache Bauweise des Drehtisches gemäß der Erfindung realisiert werden. Dies ist unter anderem für den Einsatz von Drehtischen in modernen Werkzeugmaschinen, wie z.B. CNC-Bearbeitungsstationen oder dergleichen, von besonderem Vorteil. Auch ermöglicht dies eine vergleichsweise große Werkstückhöhe beziehungsweise Dimensionierung des zu bearbeitenden Werkstücks. Denn je "niedriger" der Drehtisch in axialer Richtung ausgebildet ist, umso größer/höher kann das zu bearbeitende Werkstück ausgebildet werden und/oder umso mehr (vertikaler) Bauraum kann zum Beispiel der oder die Trag- oder Schwenkarme eines Schwenkdrehtisches beanspruchen und dementsprechend besonders stabil bzw. steif ausgebildet werden.

Beispielsweise ist die erste Lagereinheit im äußeren Bereich und/oder benachbart zum Statorgehäuse des Drehtisches und/oder die zweite Lagereinheit im mittleren beziehungsweise inneren Bereich des Drehtisches angeordnet. So können besonders hohe Drehmomentbelastungen aufgenommen werden, ohne dass sich Nachteile in Bezug auf die Genauigkeit der Bearbeitung ergeben. Auch ergeben sich für die "innere" Lagerung relativ kleine Umfangsgeschwindigkeiten, was zu einer geringeren Belastung dieses Lagers und zum Teil zu höheren realisierbaren Drehzahlen der Rotoreinheit führen kann.

Vorteilhafterweise ist längs der Drehachse in axialer Richtung betrachtet die erste Lagereinheit wenigstens teilweise überlappend zur zweiten Lagereinheit angeordnet. Dies bedeutet, dass dieser axiale Abstand negativ ist und/oder die beiden separaten, voneinander beabstandeten Lagereinheiten in Axialrichtung zumindest zum Teil auf der gleichen "Höhe" bzw. Position angeordnet sind. Hiermit erfolgt eine besonders kompakte Bauweise der erfindungsgemäßen Lagerung mit zwei separaten Lagereinheiten.

In einer besonderen Ausführungsform der Erfindung weist die zweite Lagereinheit beziehungsweise das Kegel- oder Zylinderrollenlager einen kleineren Außendurchmesser auf als die erste Lagereinheit, die insbesondere als Axial-Schräg-Kugellager ausgebildet ist. Hiermit wird gewährleistet, dass das Kegel- oder Zylinderrollenlager eine vergleichsweise geringe Umlaufsgeschwindigkeit auf Grund des kleineren Durchmessers aufweist. Dies führt in vorteilhafter Weise dazu, dass der Drehtisch beziehungsweise die Rotoreinheit relativ große Drehzahlen realisieren kann, ohne dass das Kegel- oder Zylinderrolllager nachteilige Belastungen erfahren muss, d.h. insbesondere eine größere Wärmeentwicklung aufweist. Durch die größeren Drehzahlen, die der Drehtisch mit Hilfe dieser vorteilhaften Maßnahme im Betrieb realisieren kann, kann eine besonders vorteilhafte Drehbearbeitung umgesetzt werden.

Der Drehtisch gemäß der Erfindung kann in vorteilhafter Weise als Dreh-Frästisch ausgebildet werden. Das heißt, dass dieser sowohl hohe Anforderungen in Bezug auf die maximal mögliche Drehzahl als auch auf die Steifigkeit kombiniert, insbesondere die axiale und radiale Steifigkeit/Kippsteifigkeit. So kann mit Hilfe der vorliegenden Erfindung der Drehtisch beziehungsweise die Werkzeugmaschine in Betrieb sehr flexibel sowohl für Drehbearbeitungen als auch für Fräsbearbeitungen eingesetzt werden. Dementsprechend wird gegenüber dem Stand der Technik, bei dem spezielle Drehtische für qualitativ hochwertige Drehbearbeitung und spezielle Drehtische für qualitativ hochwertige Fräsbearbeitung notwendig waren, eine kostengünstige und besonders flexible Verwendung des Drehtisches gemäß der Erfindung umgesetzt.

Grundsätzlich kann gemäß der Erfindung eine (innere) Kühlung/Temperierung der Rotoreinheit und insb. auch der Statoreinheit verwirklicht werden, wobei auch im bzw. selbst nach längerem Betrieb des Drehtisches eine nachteilige Veränderung bzw. ein sog. "Kippen" der Drehachse durch thermische Energie bzw. Wärmedehnungen wirkungsvoll verhindert bzw. zumindest sehr stark reduziert wird.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen ersten Schnitt durch einen Drehtisch mit Zu- und Abfuhr eines Kühlmediums des Rotors,
- Figur 2: einen schematischen, zweiten Schnitt durch Kühlverteilerkanäle des Drehtischs gemäß Figur 1 und
- Figur 3: einen schematischen, senkrecht zur Drehachse ausgerichteten Querschnitt durch den Drehtisch gemäß Figur 1.

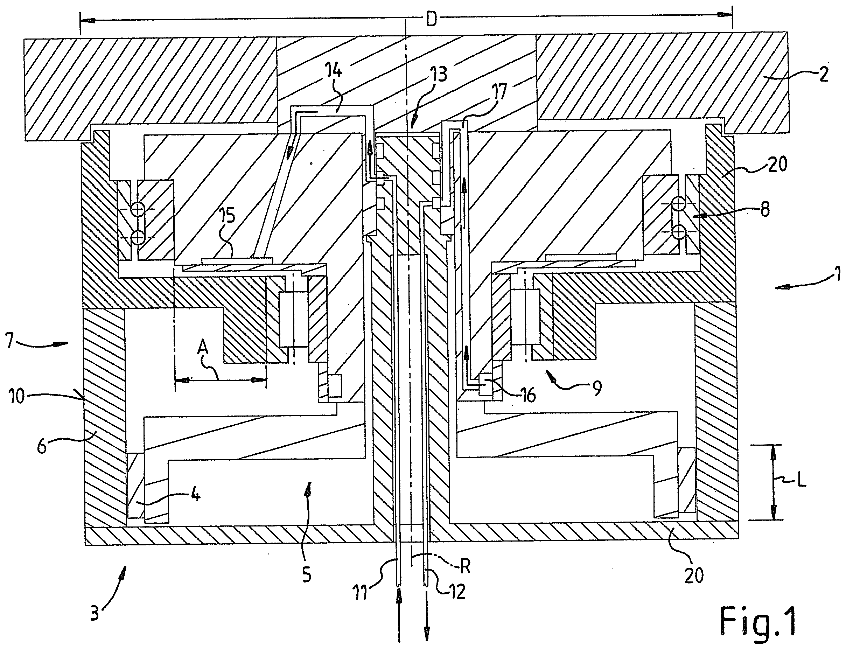

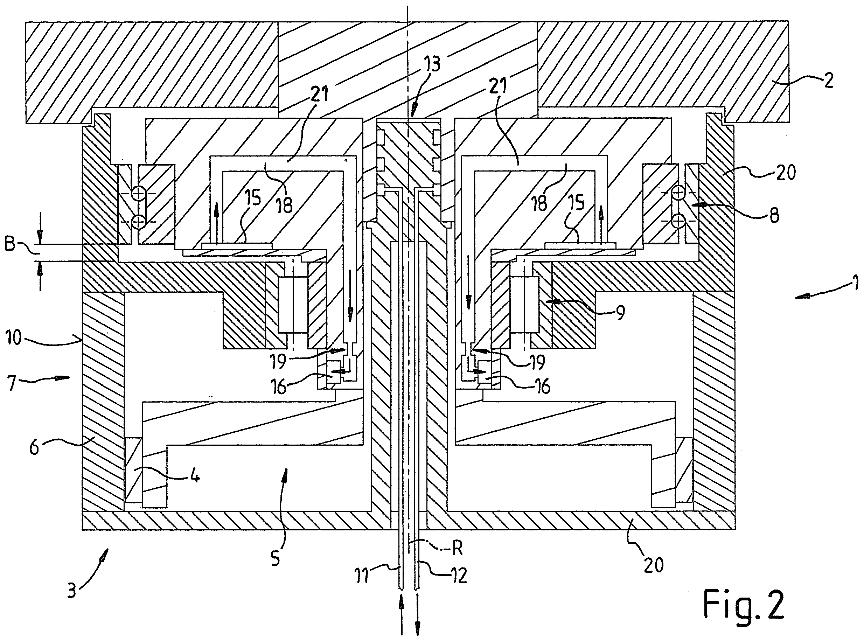

In den Figuren 1 und 2 ist ein Drehtisch 1 schematisch dargestellt, der ein Drehtischgehäuse 20 und eine Tischplatte 2 beziehungsweise ein Dreh- oder Schaltteller 2 zur Fixierung beziehungsweise zum Verspannen eines nicht näher dargestellten Werkstückes für die spannende Bearbeitung in einer Werkzeugmaschine aufweist. Die Fixierung beziehungsweise die Verspannung des Werkstückes kann in bekannter Weise beispielsweise mit einem sogenannten Drei-Backenfutter oder dergleichen realisiert werden. Hierzu kann (ohne nähere Darstellung) der Drehtisch 1 beziehungsweise die Tischplatte 2 ein Spannfluid, d.h. ein mit Druck beaufschlagbares Gas, insbesondere Druckluft, oder eine mit Druck beaufschlagbare Hydraulikflüssigkeit, insbesondere ein Hydrauliköl, zur Betätigung der Fixierung beziehungsweise Verspannung und/oder entsprechender Fixier- beziehungsweise Spannelemente wie das Drei-Backenfutter oder dergleichen aufweisen.

Beim Drehtisch 1 handelt es sich vorliegend um einen direkt angetriebenen Drehtisch 1 mit einem elektromagnetischen Antrieb 3 bzw. Torquemotor, wobei der elektromagnetische Antrieb 3 mehrere in Umfangsrichtung angeordnete Permanentmagnete 4 einer Rotoreinheit 5 aufweist und zudem (lediglich schematisch dargestellte) elektromagnetische Antriebsspulen 6 einer Statoreinheit 7 aufweist. Der elektromagnetische Antrieb 3 beziehungsweise Elektromotor 3 ist vorliegend sehr grob beziehungsweise sehr schematisch dargestellt, da es sich hier um allgemein bekannte Komponenten von Direktantriebssystemen beziehungsweise Torquemotoren von Drehtischen 1 handelt.

In den Figuren wird deutlich, dass der Elektromotor 3 einen radial ausgerichteten Durchmesser D aufweist, der größer als eine axial ausgerichtete Länge L des Elektromotors 3 beziehungsweise der Permanentmagnete 4 und/oder Antriebsspulen 6 ist. Der Durchmesser D (des Antriebs 3 und/oder der Tischplatte 2) kann auch um etwa das 2- bis 5-Fache bzw. um ein Mehrfaches größer als die Länge L (der Permanentmagnete 4 und/oder Antriebsspulen 6 und/oder eines Drehtischgehäuses 20) ausgebildet werden.

Zudem ist in den Figuren eine Drehachse R dargestellt, um die sich die Rotoreinheit 5 drehen kann. Zur Verdeutlichung ist in den Figuren die Rotoreinheit 5 beziehungsweise deren rotierende Elemente/Komponenten mit einer Schraffur von rechts oben nach links unten markiert. Dagegen ist die Statoreinheit 7 beziehungsweise die statischen Komponenten/Elemente des Drehtisches 1 mit einer Schraffur von links oben nach rechts unten markiert.

So wird deutlich, dass ein erstes Lager 8 einen statischen Außenring und einen rotierbaren Innenring aufweist und zudem als Wälzkörper mehrere Kugeln besitzt. Beim ersten Lager 8 handelt es sich vorliegend um ein Axial-Schräg-Kugellager mit zwei Laufbahnen beziehungsweise das erste Lager 8 ist in vorteilhafter Weise als zweireihiges Axial-Schräg-Kugellager ausgebildet. Zudem wird deutlich, dass das erste Lager 8 einen vergleichsweise großen Lager-Durchmesser aufweist. Das heißt, dass das erste Lager 8 einen größeren Lager-Durchmesser als ein zweites Lager 9 aufweist, das vorliegend als Zylinderrollenlager mit mehreren Zylindern als Wälzkörper ausgebildet ist.

So ist zwischen dem ersten Lager 8 beziehungsweise dem Axial-Schräg-Kugellager 8 und dem zweiten Lager 9 beziehungsweise Zylinderrollenlager 8 in radialer Richtung, d.h. senkrecht beziehungsweise orthogonal zur Drehachse R, ein vorteilhafter radialer Abstand A vorgesehen.

In dem in den Figuren dargestellten Ausführungsbeispiel ist zudem auch in axialer Richtung beziehungsweise in Richtung der Drehachse R zwischen dem ersten Lager 8 und dem zweiten Lager 9 ein axialer Abstand B vorgesehen. In einer besonders vorteilhaften (nicht dargestellten) Weiterbildung der Erfindung überlappen sich die beiden separaten Lager 8, 9, d.h. das erste Lager 8 und das zweite Lager 9, in axialer Richtung der Drehachse R, so dass kein und/oder ein negativer axialer Abstand B in axialer Richtung dieser beiden überlappenden Lager 8, 9 ausgebildet ist. Diese zuletzt genannte Variante der Lageranordnung ist besonders platzsparend bei einem Drehtisch gemäß der Erfindung, so dass dieser eine besonders kleine/kurze axiale Gesamtlänge aufweisen kann.

Durch den vorteilhaften, vergleichsweise kleinen Lager-Durchmesser des zweiten Lagers 9 beziehungsweise des Zylinderrollenlagers 9 kann der Drehtisch gemäß der Erfindung vergleichsweise hohe Drehzahlen realisieren, vorzugsweise größer als 1000 Umdrehungen pro Minute, ohne dass die Lagerung und vor allem auch das Zylinderrollenlager 9 zu sehr beansprucht beziehungsweise gegebenenfalls beschädigt werden würde.

Durch die vorteilhafte Ausbildung von zwei voneinander beabstandeten Lagereinheiten 8, 9 wird eine besonders große axiale und auch radiale Steifigkeit des Drehtisches 1 beziehungsweise der Tischplatte 2 verwirklicht. Somit kann der Drehtisch 1 flexibel sowohl für Drehbearbeitung als auch für Fräsbearbeitungen eingesetzt werden und hierbei nicht nur hohe Drehzahlen, sondern auch eine hohe Steifigkeit und somit eine hohe Genauigkeit der Spannbearbeitung ermöglichen.

Ohne nähere Darstellung kann an einer äußeren Außenseite 10 beziehungsweise Oberfläche des Stators 6 eine Kühlung, insbesondere eine Flüssigkeitskühlung vorgesehen werden, um vor allem den Elektromotor 3 beziehungsweise elektromagnetischen Antrieb 3 von außen bzw. von der Statorseite her zu kühlen.

In vorteilhafter Weise weist der Drehtisch 1 gemäß den Figuren 1 und 2 darüber hinaus eine vorteilhafte "innere" Kühlung der Rotoreinheit 5 beziehungsweise deren drehbaren Komponenten auf, d.h. von der Seite/Richtung der zentralen/mittigen Drehachse R her betrachtet. Hierzu weist der Drehtisch 1 beziehungsweise der Rotor 5 in vorteilhafter Weise eine Zufuhrleitung 11 sowie eine Abfuhrleitung 12 auf, um ein Kühlmedium, vorzugsweise eine Kühlflüssigkeit, dem Rotor 5 zu- und abzuführen.

Mit Hilfe einer vorteilhaften Drehdurchführung 13 wird das Kühlmedium über wenigstens einen Vorlaufkanal 14 einem ersten Ringkanal 15 zugeleitet.

Ein Rücklauf der vorteilhaften inneren Kühlung des Drehtisches 1 beziehungsweise des Rotors 5 erfolgt über einen zweiten Ringkanal 16, der über wenigstens einen Rücklaufkanal 17 zur Drehdurchführung 13 und zum Abfuhrkanal 12 führt.

Die beiden Ringkanäle 15 sowie 16 erstrecken sich im Wesentlichen voll umfänglich, d.h. um 360°, um die Drehachse R der Rotoreinheit. Hiermit wird gewährleistet, dass das Kühlmedium, insbesondere die Kühlflüssigkeit, voll umfänglich beziehungsweise symmetrisch um die Drehachse R verteilt, d.h. im ersten Ringkanal 15, und mittels des zweiten Ringkanals 16 gesammelt und zu/weg von der Drehdurchführung 13 strömen kann.

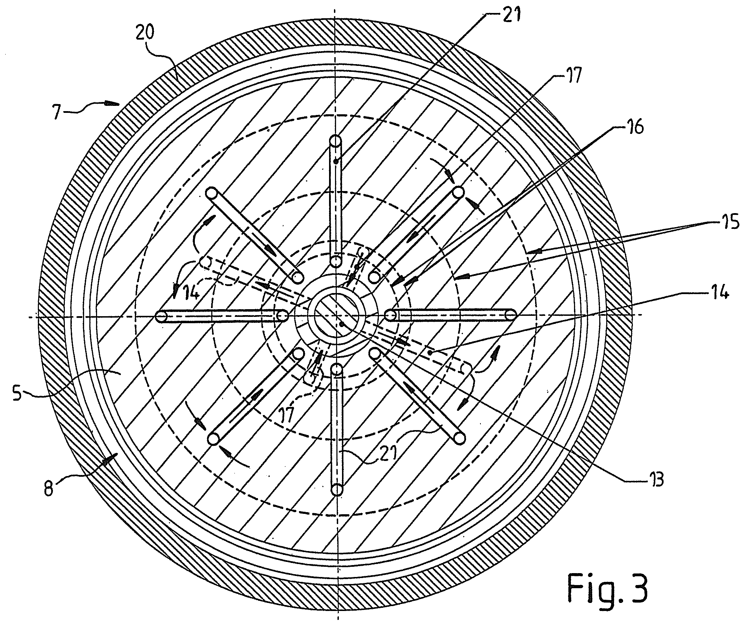

In Figur 1 ist lediglich schematisch ein Vorlaufkanal 14 und ein Rücklaufkanal 17 auf gleicher beziehungsweise auf der abgebildeten Schnittebene dargestellt. Dies soll lediglich als schematische Darstellung dienen, da in der Praxis vielmehr eine Ausführung von Vorteil ist, wobei jeweils zwei, um 180° versetzte, d.h. auf zum Beispiel der abgebildeten Schnittebene symmetrisch ausgebildete Vorlaufkanäle 14 vorgesehen sind und zu dieser Vorlaufebene um 90° um die Drehachse R verdrehte in einer Rücklaufebene angeordnete, zwei Rücklaufkanäle 17 angeordnet sind. Das bedeutet, dass wie in Figur 3 ersichtlich von oben auf den Drehtisch 1 im Querschnitt betrachtet sich hierbei jeweils um 90° versetzt/verdreht ein Vorlaufkanal 14 mit einem Rücklaufkanal 17 entsprechend abwechselt. Hierdurch wird eine symmetrische Ausbildung aller Vor- und Rücklaufkanäle 14, 17 realisiert und somit eine Unwucht des Drehtisches 1 beziehungsweise der inneren Kühlung vermieden.

In Figur 2 ist der Drehtisch 1 in einem zweiten Schnitt dargestellt, wobei zwei Kühl- bzw. Verteilerkanäle 18 ersichtlich sind. So verdeutlich Figur 2, dass das Kühlmedium, insbesondere die Kühlflüssigkeit, vom ersten Ringkanal 15 jeweils über die Verteilerkanäle 18 zum zweiten, in vertikaler Richtung betrachtet "unten" angeordneten Ringkanal 16 strömt. Hierzu sind in Figur 2, wie übrigens auch in Figur 1, die Strömungsrichtungen des Kühlfluids mit Pfeilen schematisch dargestellt.

Vorzugsweise sind mehrere, beispielsweise 12 oder 24 Kühlkanäle 18 beziehungsweise Verteilerkanäle 18 um die Drehachse R, insbesondere symmetrisch und/oder sternförmig angeordnet. Hierdurch wird sowohl eine gleichmäßige Kühlung in Umfangsrichtung als auch ein Vermeiden einer Unwucht durch die Kühlkanäle 18 beziehungsweise Verteilerkanäle 18 gewährleistet.

In Figur 2 ist weiterhin eine Drosselstelle 19 im Endbereich eines Verteilerkanals 18 dargestellt. Eine derartige Drosselstelle 19 kann beispielsweise in der Praxis als in den Verteilerkanal 18 angebrachte Madenschraube mit zentraler Bohrung realisiert werden. Durch die Verringerung des Querschnitts an der Drosselstelle 19 beziehungsweise durch die Bohrung der Madenschraube wird es in vorteilhafter Weise möglich, dass der Druck beziehungsweise die Strömungsmenge im Verteilerkanal 18 jeweils recht genau einstellbar ist. Zudem wird durch eine exakte Ausbildung der Querschnitte der Drosselstelle 19 beziehungsweise der Bohrung in entsprechender Madenschraube eine gleichmäßige Druckeinstellung in allen Kühlkanälen 18 beziehungsweise Verteilerkanälen 18 realisiert. Dies gewährleistet eine gleichmäßige Kühlung und somit eine gleichmäßige Temperierung der rotierenden Komponenten des Drehtisches 1 beziehungsweise des drehbaren Rotors 5 von "innen".

Vorzugsweise wird ein geschlossener Kühlkreislauf des Kühlmediums realisiert. Das heißt, dass beispielsweise mit Hilfe einer vorteilhaften Pumpe beziehungsweise Druckerzeugungseinheit das Kühlmedium, insbesondere die Kühlflüssigkeit, über den Zufuhrkanal 11 über die Drehdurchführung 13 in den Rotor 5 eingebracht und über die Ringkanäle 15, 16 sowie die Verteilerkanäle 18 wieder zurück in die Drehdurchführung 13 geleitet und aus dem Drehtisch 1 mittels der Rücklaufleitung beziehungsweise Abfuhrleitung 12 zur Pumpe und/oder zu einem Mediumspeicher beziehungsweise Flüssigkeitsspeicher und/oder wenigstens einem Wärmetauschelement geleitet werden kann, vorzugsweise in einem geschlossenen Kühlkreislauf.

Ohne nähere Darstellung kann sowohl eine "äußere" Kühlung des elektromagnetischen Antriebssystems 3 beziehungsweise des Elektromotors 3 an der Außenumfangsfläche 10 als auch eine "äußere" Kühlung der Lagerung, insbesondere des Lagers 8, realisiert werden. Hierdurch kann eine vorteilhafte äußere sowie innere Kühlung und somit eine vollständige beziehungsweise gleichmäßige Temperierung nahezu des gesamten Drehtisches 1 gemäß der Erfindung realisiert werden. Dies gewährleistet eine besonders hohe Genauigkeit bei der Bearbeitung mit einem Drehtisch 1 gemäß der Erfindung.

Vor allem in Figur 3 wird die Anordnung der Ringkanäle 15, 16 in Verbindung mit den radialen Kühlkanälen 18 bzw. radial ausrichteten Abschnitten 21 schematisch veranschaulicht, wobei die Abschnitte 21 bevorzugt auf/an einer Ebene bzw. ebenen, zur Drehachse senkrecht/orthogonal ausgerichteten Fläche angeordnet sind, d.h. vorliegend in der Blattebene. Hierin sind vereinzelt schematische Strömungspfeile des Kühlmediums eingezeichnet, um die prinzipielle Durchströmung der Rotoreinheit 5 bzw. des Drehtisches gemäß der Erfindung, insb. das Einströmen und das Ausströmen in/aus den Kühlkanälen 18 bzw. radialen Abschnitten 21, besser zu verdeutlichen.

Ein in den Figuren dargestellter Drehtisch gemäß der Erfindung weist eine in Umfangsrichtung gleichmäßige Temperatur des Drehtisches, insb. der Rotoreinheit, auf. Hierbei erfolgt eine (signifikante) Temperaturänderung des Kühlmediums durch Wärmeaufnahme einerseits in den Ringkanälen 15, 16 (während des Ein-/Ausstömens und Verteilens innerhalb der Kanäle 15,16) und vor allem anderseits im Wesentlichen längs der radial ausgerichteten Kühlkanäle 18 bzw. Abschnitte 21.

Demzufolge entstehen gemäß der dargestellten Variante der Erfindung keine relevanten Temperaturänderungen/-zunahmen in Umfangsrichtung, sondern im Wesentlichen nur in radialer Richtung. Dies führt in vorteilhafter Weise zur Vermeidung einer nachteiligen Änderung der Drehachsenausrichtung und somit zu einer besonders hohen Qualität bei der Werkstückbearbeitung bzw. des Betriebs der Werkzeugmaschine mit einem erfindungsgemäßen Drehtisch.

### Bezugszeichenliste

- 1: Drehtisch
- 2: Tischplatte
- 3: Antriebsmotor
- 4: Permanentmagnet
- 5: Rotor
- 6: Spule
- 7: Stator
- 8: Lager
- 9: Lager
- 10: Außenseite
- 11: Leitung
- 12: Leitung
- 13: Drehdurchführung
- 14: Kanal
- 15: Ringkanal
- 16: Ringkanal
- 17: Kanal
- 18: Kanal
- 19: Drosselstelle
- 20: Drehtischgehäuse
- 21: Abschnitt

- A: Abstand
- B: Abstand
- D: Durchmesser
- L: Länge
- R: Drehachse

## Patentansprüche

1. Drehtisch (1) für eine Werkzeugmaschine, wobei eine Statoreinheit (7) und eine wenigstens um eine Drehachse (R) drehbare Rotoreinheit (5) vorgesehen ist, wobei die Rotoreinheit (5) wenigstens eine Aufnahmeeinheit (2) zur Aufnahme eines Werkstückes umfasst, wobei eine erste Lagereinheit (8, 9) zum Lagern der Rotoreinheit (5) in der Statoreinheit (7) vorgesehen ist, wobei ein elektromagnetischer Motorantrieb (3) zum motorischen Antrieb der Rotoreinheit (5) vorgesehen ist, wobei die Rotoreinheit (5) zumindest im Bereich des Motorantriebs (3) und/oder der ersten Lagereinheit (8, 9) wenigstens eine ein Kühlmedium sowie mindestens eine Kühlfläche umfassende Rotor-Kühlvorrichtung (14 bis 19) zur Kühlung und/oder Aufnahme von Abwärme des Motorantriebs (3) und/oder der ersten Lagereinheit (8, 9) aufweist, wobei mehrere, jeweils mindestens eine Kühlfläche aufweisende, wenigstens teilweise über den Umfang verteilte/angeordnete Kühlkanäle (14 bis 18) und/oder Kühlelemente (14 bis 18) vorgesehen sind, wobei die Kühlkanäle (14 bis 18) und/oder Kühlelemente (14 bis 18) jeweils wenigstens einen im Wesentlichen radial ausgerichteten Abschnitt (21) aufweisen, **dadurch gekennzeichnet, dass** wenigstens eine zweite Lagereinheit (8, 9) zum Lagern der Rotoreinheit (5) vorgesehen ist, wobei zwischen der ersten Lagereinheit (8, 9) und der zweiten Lagereinheit (8, 9) ein Abstand (A, B) vorgesehen ist, dass längs der Drehachse (R) in axialer Richtung und/oder quer zur Drehachse (R) in radialer Richtung betrachtet die Rotor-Kühlvorrichtung (14 bis 19) wenigstens einen zwischen der ersten Lagereinheit (8, 9) und der zweiten Lagereinheit (8, 9) angeordneten, im Wesentlichen sich über den gesamten Umfang erstreckenden Ringkanal (15, 16) zum Verteilen und/oder Sammeln von Kühlmedium aufweist und dass die im Wesentlichen radial ausgerichteten Abschnitte (21) der Kühlkanäle (14 bis 18) und/oder Kühlelemente (14 bis 18) zwischen einem als Verteiler-Ringkanal (15) ausgebildeten, ersten Ringkanal (15) zum Verteilen von Kühlmedium in die Abschnitte (21) und einem als Sammel-Ringkanal (16) ausgebildeten, zweiten Ringkanal (16) zum Sammeln von Kühlmedium aus den Abschnitten (21) angeordnet sind.

2. Drehtisch nach Anspruch 1, **dadurch gekennzeichnet, dass** längs der Drehachse (R) in axialer Richtung und/oder quer zur Drehachse (R) in radialer Richtung betrachtet die Rotor-Kühlvorrichtung (14 bis 19) wenigstens einen zwischen der ersten Lagereinheit (8, 9) und dem Motorantrieb (3) angeordneten, im Wesentlichen sich über den gesamten Umfang erstreckenden Ringkanal (15, 16) zum Verteilen und/oder Sammeln von Kühlmedium aufweist.

3. Drehtisch nach einem der vorgenannten Ansprüche, **dadurch gekennzeichnet, dass** die im Wesentlichen radial ausgerichteten Abschnitte (21) der Kühlkanäle (14 bis 18) und/oder Kühlelemente (14 bis 18) im Wesentlichen senkrecht zur Drehachse (R) und/oder auf/an einer Ebene angeordnet sind.

4. Drehtisch nach einem der vorgenannten Ansprüche, **dadurch gekennzeichnet, dass** mindestens einer der Kühlkanäle (14 bis 19) und/oder Kühlelemente (14 bis 18) wenigstens ein Druckkontrollelement (19) zur Kontrolle des Drucks des Kühlmediums aufweist.

5. Drehtisch für eine Werkzeugmaschine nach einem der vorgenannten Ansprüche, **dadurch gekennzeichnet, dass** der Drehtisch (1) als Schwenkrundtisch ausgebildet ist.

6. Werkzeugmaschine mit einem Drehtisch (1) nach einem der vorgenannten Ansprüche.

## Claims

1. A turntable (1) for a machine tool, wherein a stator unit (7) and a rotor unit (5) rotatable about at least one axis of rotation (R) are provided, wherein the rotor unit (5) comprises at least one receiving unit (2) for receiving a workpiece, wherein a first bearing unit (8, 9) for mounting the rotor unit (5) in the stator unit (7) is provided, wherein an electromagnetic motor drive (3) for motorised driving of the rotor unit (5) is provided, wherein the rotor unit (5) has, at least in the region of the motor drive (3) and/or of the first bearing unit (8, 9), at least one rotor cooling device (14 to 19) comprising a coolant and at least one cooling surface for cooling and/or receiving waste heat from the motor drive (3) and/or the first bearing unit (8, 9), wherein a plurality of cooling channels (14 to 18) and/or cooling elements (14 to 18) are provided, each having at least one cooling surface and being distributed/arranged at least partially over the circumference, wherein the cooling channels (14 to 18) and/or cooling elements (14 to 18) each have at least one substantially radially oriented section (21), **characterised in that** at least one second bearing unit (8, 9) for mounting the rotor unit (5) is provided, wherein a spacing (A, B) is provided between the first bearing unit (8, 9) and the second bearing unit (8, 9), **in that**, viewed along the axis of rotation (R) in the axial direction and/or transversely to the axis of rotation (R) in the radial direction, the rotor cooling device (14 to 19) has at least one annular channel (15, 16) which is arranged between the first bearing unit (8, 9) and the second bearing unit (8, 9) and which extends substantially over the entire circumference for distributing and/or collecting coolant, and **in that** the substantially radially oriented sections (21) of the cooling channels (14 to 18) and/or cooling elements (14 to 18) are arranged between a first annular channel (15), which is designed as a distributor annular channel (15), for distributing coolant into the sections (21) and a second annular channel (16), which is designed as a collecting annular channel (16), for collecting coolant from the sections (21).

2. The turntable according to claim 1, **characterised in that**, viewed along the axis of rotation (R) in the axial direction and/or transversely to the axis of rotation (R) in the radial direction, the rotor cooling device (14 to 19) has at least one annular channel (15, 16) which is arranged between the first bearing unit (8, 9) and the motor drive (3) and which extends substantially over the entire circumference for distributing and/or collecting coolant.

3. The turntable according to any one of the preceding claims, **characterised in that** the substantially radially oriented sections (21) of the cooling channels (14 to 18) and/or cooling elements (14 to 18) are arranged substantially perpendicular to the axis of rotation (R) and/or on a plane.

4. The turntable according to any one of the preceding claims, **characterised in that** at least one of the cooling channels (14 to 19) and/or cooling elements (14 to 18) has at least one pressure control element (19) for controlling the pressure of the coolant.

5. The turntable for a machine tool according to any one of the preceding claims, **characterised in that** the turntable (1) is designed as a tilting rotary table.

6. A machine tool having a turntable (1) according to any one of the preceding claims.

## Revendications

1. Table tournante (1) pour machine-outil, une unité de stator (7) et une unité de rotor (5) pouvant tourner autour d'au moins un axe de rotation (R) étant prévues, l'unité de rotor (5) comprenant au moins une unité de réception (2) pour recevoir une pièce, une première unité de palier (8, 9) étant prévue pour supporter l'unité de rotor (5) dans l'unité de stator (7), un entraînement électromagnétique (3) étant prévu pour entraîner le rotor (5), l'unité de rotor (5) comportant au moins un dispositif de refroidissement de rotor (14 à 19), au moins dans la zone de l'entraînement moteur (3) et/ou de la première unité de palier (8, 9), comprenant un fluide de refroidissement et au moins une surface de refroidissement, pour refroidir et/ou recevoir la chaleur perdue provenant de l'entraînement moteur (3) et/ou de la première unité de palier (8, 9), plusieurs canaux de refroidissement (14 à 18) et/ou éléments de refroidissement (14 à 18) étant prévus, chacun comportant au moins une surface de refroidissement et étant répartis/agencés au moins partiellement sur le périmètre, les canaux de refroidissement (14 à 18) et/ou les éléments de refroidissement (14 à 18) présentant chacun au moins une section (21) sensiblement orientée radialement, **caractérisée en ce qu'**au moins une deuxième unité de palier (8, 9) est prévue pour supporter l'unité de rotor (5), un écartement (A, B) est prévu entre la première unité de palier (8, 9) et la seconde unité de palier (8, 9), **en ce que** le long de l'axe de rotation (R) dans la direction axiale et/ou transversalement à l'axe de rotation (R) dans la direction radiale, le dispositif de refroidissement de rotor (14 à 19) présente au moins un canal annulaire (15, 16) agencé entre la première unité de palier (8, 9) et la deuxième unité de palier (8, 9), s'étendant essentiellement sur toute la périphérie, pour distribuer et/ou collecter le fluide de refroidissement, et **en ce que** les tronçons (21) des canaux de refroidissement (14 à 18) et/ou éléments de refroidissement (14 à 18) sensiblement alignés radialement entre un premier canal annulaire (15), qui est conçu comme canal annulaire de distribution (15), pour distribuer un fluide de refroidissement dans les tronçons (21) et un deuxième canal annulaire (16), conçu comme un canal annulaire de collecte, pour recueillir le fluide de refroidissement des tronçons (21).

2. Table tournante selon la revendication 1, **caractérisée en ce que**, le long de l'axe de rotation (R) dans la direction axiale et/ou transversalement à l'axe de rotation (R) dans la direction radiale, le dispositif de refroidissement du rotor (14 à 19) présente au moins un canal annulaire (15, 16) disposé entre la première unité de palier (8, 9) et l'entraînement moteur (3) et s'étendant sensiblement sur toute la périphérie pour distribuer et/ou collecter le fluide de refroidissement.

3. Table tournante selon l'une quelconque des revendications précédentes, **caractérisée en ce que** les sections (21) des canaux de refroidissement (14 à 18) et/ou éléments de refroidissement (14 à 18) sensiblement alignés radialement sont disposés sensiblement perpendiculairement à l'axe de rotation (R) et/ou sur/dans un plan.

4. Table tournante selon l'une quelconque des revendications précédentes, **caractérisée en ce qu'**au moins l'un des canaux de refroidissement (14 à 19) et/ou éléments de refroidissement (14 à 18) présente au moins un élément de régulation de pression (19) pour commander la pression du fluide de refroidissement.

5. Table tournante pour machine-outil selon l'une quelconque des revendications précédentes, **caractérisée en ce que** la table tournante (1) est conçue comme une table circulaire pivotante.

6. Machine-outil avec une table tournante (1) selon l'une quelconque des revendications précédentes.
